# EUROPEAN PATENT APPLICATION

(11) **EP 4 679 368 A1**
(43) Date of publication of application: **14.01.2026**
(21) Application number: 24188370.1
(22) Date of filing: 12.07.2024
(51) Int. Cl.: G06T 7/73

(54) **PINPOINTING OBJECT FEATURES IN 3D SPACE**

(71) Applicant: Norsk Titanium AS, 0278 Oslo (NO)
(72) Inventor: Zamiri, Reza, N-1465 Strømmen (NO); Vigdal, Brede, N-3533 TYRISTRAND (NO); Brunes, Geir, N-3370 VIKERSUND (NO)
(74) Representative: Acapo Onsagers AS

(57) **Abstract**

There is provided a method (300) of calibrating a sensing system (100) for determining a position of a feature (236) of an object (10). The method (300) comprises: defining (310) reference positions (181, 182) within a three-dimensional reference system; determining (320, 330) corresponding positions within an image frame (122) of an image sensor (120) and positions within a sensor frame (132) of a further sensor (130); and generating (340) a mapping (150) linking the reference positions and the positions. A position of the feature of the object may be determined based on the mapping. There is also provided a method (400) for monitoring a workpiece (10), the method (400) comprising: obtaining (420, 430) shortwave infrared images (125, 135); determining (440) a corresponding image position of a feature of the workpiece or of an automated welding system using a machine-learned model (190); and determining (450) a position of the feature.

## Description

### Technical Field

Aspects of this disclosure relate to methods for calibrating a sensing system, using the calibration, and for monitoring a workpiece being manufactured using an automated welding system, controllers configured to perform the methods, systems comprising the controllers or calibrated using one of the method, and computer-readable media for causing a computer to carry out the methods.

### Background

To improve automation across a range of industries, improvements in sensor technology are required. Gathering information and performing monitoring about an ongoing task or process enables safe, efficient, accurate, and fast performance of that task by a robotic system.

How well a particular task can be performed depends upon optimizations of the process. Poor data quality, heavy computational burden, or imprecise methodologies can impact how the task is performed. These faults can occur when sensing data. Accordingly, it is a general aim within the field of automation to improve capabilities of sensors and sensing systems.

An example of sensors that are useful for improving automation are depth-sensing camera systems. It is difficult to sense a depth of an object or feature based on a two-dimensional image alone. Additional information is required to augment the image and gain understanding of depths or relative locations of objects depicted within the image.

Depth-sensing camera systems are commonly either systems that rely on emission of a signal and detection of a reflection of the signal from an object, which enables triangulation of a location of the object, or a form of stereo-vision, whereby images from two cameras are meticulously matched to enable triangulation.

However, both types of system can perform poorly in environments where the images obtained include a lot of noise from, for example, external light sources. Furthermore, such systems can have a high computational burden, especially stereo-vision, which may require a deep learning algorithm for matching the two images. In turn, this may result in determinations of depth to be slow.

These drawbacks may prevent the use of depth-sensing camera systems in specific applications. In automated welding processes, including additive manufacturing processes, for example, there is a requirement for high accuracy and responsiveness to provide high-quality welded components with low waste. However, the depth-sensing camera systems described above may be inaccurate due to the presence of bright light emitted by welding tools and may have high latency due to their high computational burdens, meaning that they are unsuitable for use in these applications.

### Summary

Aspects of the disclosure are provided by the subject-matter of the appended claims.

The techniques described herein relate to a calibration process for a sensing system to enable determination, by the sensing system, of positions of features of objects within a three-dimensional reference system. Sensing systems using the calibration to perform said determinations can perform well in environments with poor signal-to-noise ratios, despite such environments being challenging to existing depth-sensing and position-sensing systems. The calibration also enables a computationally light determination, meaning that the sensing system using the calibration can be used in real-time, responsive operations. The techniques also relate to use of the calibration process, systems for performing the calibration process, systems calibrated according to the calibration process, and computer-readable media configured to enable performance of the processes.

The techniques described herein also relate to processes for improved detection of positions of workpieces or automated welding systems or features of the workpieces or automated welding systems within a reference system. These processes result in improved accuracy and enable a sensing system to operate as part of a real-time manufacturing operation. Systems and computer-readable media for performing such methods are also described.

Therefore, according to a first aspect, there is provided a method of calibrating a sensing system for determining a position of a feature of an object within a three-dimensional reference system. The sensing system comprises an image sensor having an image frame. The sensing system comprises a further sensor having a sensor frame. The method comprises: defining a first reference position and a second reference position within the three-dimensional reference system, the second reference position being different to the first reference position; determining, within the image frame of the image sensor, an image frame position corresponding to the first reference position and an image frame position corresponding to the second reference position; determining, within the sensor frame of the further sensor, a sensor frame position corresponding to the first reference position and a sensor frame position corresponding to the second reference position; and generating a mapping that links the first reference position, the image frame position corresponding to the first reference position, and the sensor frame position corresponding to the first reference position, and that links the second reference position, the image frame position corresponding to the second reference position, and the sensor frame position corresponding to the second reference position.

The mapping may be said to map the three-dimensional reference system to reference systems of the image sensor and the further sensor, i.e. the reference systems associated with the image frame and the sensor frame.

Calibrating a sensing system comprising the image sensor and the further sensor according to the above method enables a feature of an object to be effectively pinpointed. A sensing system, calibrated according to said method, can convert between the frames of reference of the sensors and a separate, three-dimensional reference system based on the mapping. As a result, depth-sensing is achieved for an image sensor whose output is otherwise two dimensional.

The above method provides greater freedom for positioning of the sensors relative to one another; there is no requirement for the sensors to be in specific positions relative to one another, nor is there any requirement for the relative positions of the sensors to be known or accurately determined. This provides advantages in the subsequent use of the sensing system, enabling placement of the sensors to be determined to optimize sensing. Additionally, different sensors can be chosen to suit the desired application, providing further freedom and optimization in how sensing is performed.

Such a method may be useful for automated manufacturing processes, in which it is desirable for a sensing system to be able to map to a reference system of a machine or tool being used in the automated manufacturing process. For example, automated welding systems, particularly for use in additive manufacturing, utilize a machine reference system within which the tools used to perform automated welding are moved relative to one another.

A further advantage arises in that the calibration enables the reference system to be mapped to the image and sensor frames in optimum or close to optimum conditions, i.e. without any interference from noise that may otherwise be present during use of the sensing system. For example, the method may be provided in darkness, with the reference positions illuminated, to provide a high signal-to-noise ratio to ensure that the calibration is precise. By performing the calibration and mapping before use of the sensing system, the impact of noise on the subsequent determination of the position of the feature of the object by the sensing system can be reduced. In additionally to producing a sensing system that can sense depth using fewer computational resources, the calibration process is also beneficial in this regard, as the process itself is also relatively computationally light. The calibration process may be performed in situ, where the sensing system is to be used, rather than in a specialist facility, and may be performed without particularly specialist equipment.

Other depth-sensing systems that utilize image sensors such as cameras may utilize disparity maps and triangulation, resulting in computationally-heavy sensing. Disparity maps and triangulation can be avoided using the above techniques. Other systems may also require calculations or measurements of focal length and calibration to correct lens distortion, and these are also avoided using the above techniques. Focal length measurements and other sensor characterisations that may be required by other methods may be reduced or eliminated altogether using the above method as the mapping is agnostic of individual sensor characteristics.

Overall, therefore, the above method is useful in enabling fast, accurate sensing with a lower computational burden.

As defined herein, a frame may be a coordinate reference system of the sensor, and may be defined by a field of view of the sensor. The image frame may therefore be defined as a two-dimensional coordinate system of the image sensor. The sensor frame may be defined as a two-dimensional coordinate system of the further sensor. The coordinate systems may be cartesian coordinate systems. The three-dimensional reference system may also be a coordinate system. The method therefore maps two two-dimensional sensor systems to a three-dimensional reference system. The reference system may be a reference system of a machine or device that is separate to the sensing system. By using two reference positions, the method may enable distances within the reference system to be mapped to distances within the image frame and the sensor frame.

The image frame may comprise a plurality of pixels. Each pixel of the plurality of pixels may have a pixel position, which may comprise a set of coordinates, and, optionally, an associated pixel label, where each pixel label corresponds to a unique pixel position in the image frame. Each image frame position may therefore be a pixel position or a pixel label.

The image sensor may be a camera, such as an optical camera, an infrared camera, or a thermal camera. The camera may be a shortwave infrared camera. The image sensor may be configured to obtain optical images, infrared images, or thermal images. The image sensor may be configured to obtain shortwave infrared images.

The first and second reference positions may have associated coordinates within the three-dimensional reference system. Defining the first and second reference positions may include selecting the first and second reference positions from among a plurality of possible reference positions. The plurality of reference positions may be predefined within storage. Defining the first and second reference positions may include receiving input from an operator indicating at least coordinates or an identifier of the reference positions within the reference system. Based on the defined first and second reference positions, a mover, which may comprise a motor, may be controlled to move an indicator to each of the first and second reference positions.

The mapping may be an overall mapping. An overall mapping may be a mapping that maps the image frame and the sensor frame to the reference system. The method may comprise: generating a first preliminary mapping linking the first reference position and the image frame position corresponding to the first reference position and linking the second reference position and the image frame position corresponding to the second reference position; and generating a second preliminary mapping linking the first reference position and the sensor frame position corresponding to the first reference position and linking the second reference position and the sensor frame position corresponding to the second reference position. A preliminary mapping may map one of the image frame or the sensor frame to the reference system. Generating the mapping may comprise combining the first preliminary mapping and the second preliminary mapping.

The mapping may comprise or form part of a data structure. The data structure may comprise an array, a table, or a tree. Generating the mapping may comprise storing the positions in an existing data structure or may comprise generating a new data structure.

The mapping may comprise a look-up table. Utilizing a look-up table may enable searching and interpolation with accuracy, speed, and low computation. The look-up table may include a plurality of entries. A first entry may comprise the first reference position, the image frame position corresponding to the first reference position, and the sensor frame position corresponding to the first reference position. A second entry may comprise the second reference position, the image frame position corresponding to the second reference position, and the sensor frame position corresponding to the second reference position. The entries may form the mapping. In other examples, the mapping may be a different type of array.

The mapping may be for use, by the sensing system or a processor of the sensing system, to determine the position of the feature in the three-dimensional reference system. A feature of an object may be a point on the object, and particularly a point on a surface of the object. A position of a feature of an object may be referred to as a position of the object. In examples, the object may be an object within an automated welding system or a workpiece.

The method may be performed by the sensing system or be a system separate to the sensing system. The sensing system and system performing the calibration may both have access to data from the image sensor and the further sensor. The method may be a computer-implemented method.

The image frame and the sensor frame may be at least partially overlapping. The first reference position and the second reference position may both appear in the image frame, and may be detectable within the sensor frame. The image frame and the sensor frame may be said to be overlapping if at least some reference positions, i.e. at least the first reference position and the second reference position, within the three-dimensional reference system are able to be sensed in both the image frame and the sensor frame.

The image sensor may be a first image sensor and the image frame may be a first image frame. The further sensor may comprise a second image sensor and the sensor frame may comprise a second image frame. The first image sensor and the second image sensor may have at least partially overlapping fields of view. In partially overlapping fields of view, at least the first reference position and the second reference position may be visible in each of the first image frame and the second frame. The field of view of the first image sensor may be different to the field of view of the second image sensor, provided the fields of view are at least partially overlapping. The first image sensor may be angled relative to the second image sensor. The first image sensor may be parallel to the second image sensor. The first image sensor and the second image sensor may be positioned so that the first image frame and the second image frame do not directly align along an axis of the reference system. In other words, the first and second image sensors may have different longitudinal axes.

The sensing system may therefore comprise a first image sensor and a second image sensor. The first image sensor and the second image sensor may the same type of image sensor. For example, the first image sensor and the second image sensor may both be optical cameras, infrared cameras, or thermal cameras. The first image sensor may be a shortwave infrared image sensor. The second image sensor may be a shortwave infrared image sensor. In other examples, the first image sensor and the second image sensor may be different types of image sensor.

Accordingly, the method enables a dual-camera system to be calibrated to perform depth-sensing. Any cameras may be used, without emission of a signal to be reflected and without disparity maps.

The image frame positions may comprise pixel positions in the first image frame. The sensor frame positions may comprise pixel positions in the second image frame. Accordingly, the mapping may comprise a pixel position pair for each reference position. The pairs may be unique for each reference position.

A resolution of the mapping may be varied by increasing the number of reference positions. The number of reference positions may be fewer than the number of pixels in the image frame, may be fewer than half of the number of pixels, or may be fewer than a quarter of the number of pixels. Having fewer reference positions than the number of pixels may result in a mapping that occupies less storage space and that is computationally less burdensome to search through. Interpolation may be used to determine positions of features that fall between at least two reference positions in the mapping.

Determining the image frame position may include obtaining an image from the image sensor. Determining the sensor frame position may include obtaining an image from the further sensor or obtaining one or more measurements from the further sensor. Pre-processing may be performed on the image or images obtained from the image sensor and/or on the measurements or images obtained from the further sensor. Pre-processing may include colour mapping or filtering, for example.

The first reference position and second reference position may be indicated by at least one indicator. Determining the image frame positions may comprise: identifying the indicator within the image frame; and determining a position of the indicator within the image frame. Where the further sensor also comprises a second image sensor having a second image frame as the sensor frame, determining the sensor frame positions may comprise identifying the indicator within the second image frame; and determining a position of the indicator within the second image frame.

The indicator may comprise part or all of an object. The object may be the object for which a position of a feature is to be determined by the sensing system or may be a different object. Where the indicator is part of an object, the indicator may be a feature of the object, such as a corner or an edge of the object. The indicator may alternatively comprise a marking or an emitted signal. For example, the indicator may comprise a projection onto a surface of an object or a design on the surface of the object. The design may be illuminated. The projection may use optical light or infrared light. The infrared light may be shortwave infrared light or near infrared light. Near or shortwave infrared light may be used where the image sensor is configured to detect near or shortwave infrared light. The method may be performed in an environment absent of other light, specifically visible light, which may enhance the signal-to-noise ratio, and therefore lead to improved accuracy of the calibration method.

Identifying the indicator within the image frame may comprise receiving input from an operator, the input identifying the indicator within the image frame. Alternatively, identifying the indicator within the image frame may be performed automatically. The indicator may be arranged to be identifiable within the image frame.

The indicator may comprises a predefined shape or pattern on a surface. Identifying the indicator within the image frame may comprise identifying the predefined shape or pattern within the image frame. Predefined shapes or patterns may enable faster identification of the reference position within the image frame, resulting in faster calibration. Such a pattern or shape may also enable enhanced accuracy, as a particular point or feature of the shape or pattern can be identified repeatedly. The shape or pattern may have a plurality of features that enable a plurality of different reference positions to be identified based on the same shape or pattern. This may reduce the amount of image frames required to perform the calibration, again improving speed and reducing computational burden. The indicator may provide as close to a point as possible, so that it can be assigned to a single pixel within the image frame.

The predefined shape or pattern may be one that can be distinguished from other features within the image frame. Colouring may also be used to distinguish the indicator from other features and to enable its identification.

The predefined shape or pattern may comprise a checkerboard pattern. A checkerboard is particularly useful because it has a plurality of edges that are regularly spaced, so can be used as different reference positions. A checkerboard pattern also enables fast recognition of the pattern or parts thereof by pattern-identification algorithms. A checkerboard pattern may also provide high contrast. In such an example, the checkerboard pattern may have a height that corresponds to a full height of the field of view of the image frame. A size of each square within the checkerboard pattern may be chosen to provide a desired resolution for the reference positions within the mapping. The checkerboard pattern may be projected onto a surface using an optical or infrared lamp or projector. Alternatively, the checkerboard pattern may be on the surface and may be illuminated using optical light or infrared light.

Other repeated patterns may also be used to achieve multiple different edges that can be extracted by a detection algorithm or machine-learned model. A machine-learned model, as referred to herein, is a model that has been trained using machine-learning to perform a particular task. Machine-learned models may also be referred to as trained machine-learning models.

The further sensor may be associated with a moving element for moving the object for which a position of a feature of the object is to be determined within the reference system. The sensor frame positions may comprise positions of the moving element.

The further sensor may be a different sensor type to the image sensor. The further sensor may be or may be associated with a moving element. By associated with, it is meant that the further sensor may be able to measure or determine the position of a motor within a reference system. The moving element may be connected to the object, in use, but the object may be moveable relative to the moving element in at least one dimension.

In some examples, the object may be a wire being fed through a material feed unit for use in an automated welding process. The moving element may comprise a stepper motor. The wire may be used as an indicator for the calibration method. A tip of the wire may indicate each of the first and second reference positions. A depth or distance of the tip of the wire from the moving element may be known. The moving element may have a single dimension in which it is configured to move. Accordingly, the sensor frame is defined by the depth or distance of the tip of the wire from the moving element and the axis of movement of the moving element. In other examples, the moving element may have two dimensional movement, and a position of the tip of the wire may be unknown.

The indicator may be identified within the image frame using a machine-learned model. A machine-learned model can efficiently and automatically identify an indicator within an image, resulting in faster calibration. The machine-learned model may be an image segmentation model, such as an instance segmentation model. The machine-learned model may be trained to identify the indicator within an image frame. The machine-learned model may be trained to perform edge detection within the image frame. The machine-learned model may be an object detection model. The machine-learned model may be a single-stage or single-shot model.

The indicator may be moved through the image frame and the sensor frame using a moving element. A plurality of images may be captured at a predetermined frequency so that different positions of the indicator are captured by each image, and these images may be provided as input to the machine-learned model.

The method may further comprise: defining a plurality of further reference positions within the three-dimensional reference system, the plurality of further reference positions being different to the first reference position and the second reference position; and for each further reference position of the plurality of further reference positions: determining an image frame position corresponding to the further reference position within the image frame of the image sensor; and determining a sensor frame position corresponding to the further reference position within the sensor frame of the further sensor; wherein the mapping is generated to link the further reference position, the image frame position corresponding to the further reference position, and the sensor frame position corresponding to the further reference position.

Many different reference positions may be determined within the reference system to enable precise determination of positions. A higher number of reference positions improves the accuracy and precision, and may also reduce the computational burden for the sensing system to detect an object because less analysis may be required to produce an accurate determination of the position of the feature of the object. In such examples, interpolation may also be more accurate.

In some examples, the reference positions may be spaced apart evenly or equidistantly across the reference system. In other examples, the reference positions may be spaced differently in different regions of the reference system. More reference positions may be defined in a centre of the reference system than around its edges. Having a higher density of reference positions in a part of the reference system where the object is most likely to be positioned may enable a balance to be achieved during calibration that ensures a fast calibration with high accuracy.

The method may further comprise storing the mapping in a memory of or associated with the sensing system. The mapping may be stored for subsequent use by the sensing system.

The method may further comprise generating a machine-learned model. The machine-learned model may be configured or trained to output a position within the three-dimensional reference system that corresponds to an input image frame position and the sensor frame position. The machine-learned model may be generated using at least part of the mapping as training data. The machine-learned model may be generated by training a machine-learning model using at least part of the mapping as training data. Training may also be performed using other training data. At least part of the mapping may be used for validation. The machine-learned model may be a different machine-learned model to the model used to identify the indicator. The machine-learned model for identifying the indicator may be referred to as a first machine-learned model, and the machine-learned model generated to output a position within the three-dimensional reference system that corresponds to an input image frame position and the sensor frame position may be referred to as a second machine-learned model.

The method may further comprise storing the second machine-learned model in the memory of the sensing system. The second machine-learned model may be stored in the memory for subsequent use by the sensing system.

The memory may be non-volatile memory. The memory may be accessible to a processor of the sensing system. Storing the mapping may comprise storing the first and second reference positions, the image frame positions, and the sensor frame positions in the memory. A data structure for the mapping or metadata associated with the mapping may also be stored. Storing the machine-learned model may comprise storing one or more parameters or weights associated with the machine-learned model. A structure of the machine-learned model may also be stored.

The method may further comprise determining, by the sensing system, a position of a feature of the object within the three-dimensional reference system based on the mapping. The method may further comprise determining an image frame position corresponding to the feature of the object within the image frame of the image sensor; determining a sensor frame position corresponding to the feature of the object within the sensor frame of the further sensor; and determining, by the sensing system, a position of the feature of the object within the three-dimensional reference system based on the image frame position, the sensor frame position, and the mapping.

The method may comprise determining, by the sensing system, the position of a further feature of the object or a further feature of a different object within the three-dimensional reference system based on the mapping. The steps of the method may be repeated to determine the position of the further feature. Alternatively, the position of the further feature may be determined based on the same image frame and sensor frame as for the original feature. A machine-learned model may be trained to extract multiple features from an image.

The sensing system may directly use the mapping to determine a position of the feature within the reference system. In other words, where the mapping is stored in the memory of the sensing system, the method may further comprise: accessing the mapping stored in the memory of the sensing system; and identifying at least one reference position of the three-dimensional reference system within the mapping that corresponds to the image frame position and the sensor frame position, wherein the position of the feature of the object is determined based on the at least one reference position. The mapping enables fast determination of a position of a feature of an object within the reference system, while maintaining a low computational burden.

When the mapping is used, the mapping may directly map the image frame position and the sensor frame position to a reference position. In other words, during calibration, the reference position, the image frame position, and the sensor frame position of the feature of the object may have been linked together in the mapping. Where the mapping directly maps the image frame position and the sensor frame position to a reference position, the position of the feature of the object may be the reference position.

The mapping may not directly map at least one of the image frame position or the sensor frame position to a reference position. The mapping may link the image frame position with a different sensor frame position and a different reference position, and/or it may link the sensor frame position with a different image frame position and a different reference position. Interpolation between at least two closest entries in the mapping may be used to determine the position of the feature. In other words, where the mapping does not directly map the image frame position and the sensor frame position to a reference position, identifying the at least one reference position within the three-dimensional reference system within the mapping may comprise: identifying at least two reference positions between which the position of the feature of the object falls based on the image frame position and the sensor frame position; and determining the position of the feature may comprise interpolating between the at least two reference positions to determine the position of the feature of the object. The at least two identified reference positions may be determined to be those having image frame positions and/or sensor frame positions that correspond to the image frame position and sensor frame position determined for the feature of the object. Interpolation may be performed directly from the mapping using classical curve fitting methods such as linear and polynomial interpolation. Interpolation enables identification of a reference position without it being directly mapped by the mapping. Utilizing interpolation may enable greater accuracy in determining a position. Enabling interpolation may enable a reduction of how many reference positions are mapped during calibration. Interpolation may also be performed using regression models, such as linear regression, random forest, support vector machines, XGBoost, decision trees, and neural networks. Interpolation from the mapping may utilize machine-learning regression models.

Where the second machine-learned model is stored in the memory of the sensing system, determining, by the sensing system, the position of the feature of the object within the three-dimensional reference system based on the mapping may comprise: inputting the image frame position corresponding to the feature and the sensor frame position corresponding to the feature into the second machine-learned model; and receiving, from the second machine-learned model, the position of the feature.

The method may further comprise obtaining an image of at least part of the object that includes the feature from the image sensor. The image frame position of the feature may be determined by providing the image to a machine-learned model. The machine-learned model for identifying the feature in the image may be referred to as a third machine-learned model. The third machine-learned model may be a different machine-learned model from the first and second machine-learned models. Alternatively, if the feature of the object is used during calibration, such as when the further sensor is associated with a moving element, the first machine-learned model and the third machine-learned model may be the same.

The third machine-learned model may be an object detection model. The third machine-learned model may be a single-stage or single-shot model. The third machine-learned model may be trained to receive the image as an input and to provide the corresponding image frame position of the feature within the image as output. The image may be pre-processed before being provided to the machine-learned model, such as by colour mapping or filtering.

The third machine-learned model may be trained using a training data set comprising a plurality of images of or including the feature. The images may comprise a part of the object including the feature or all of the object. Each image may be labelled with an image frame position of the feature of the object. A validation data set may be used to validate the machine-learned model. The validation data set may comprise a further plurality of images of or including the feature.

In contrast to other camera systems such as stereo-vision camera systems, full matching of image frames may be avoided in the present method, because only the desired feature is identified within the image frame. As a result, the computational resources required to implement such positional sensing of features is reduced.

According to a further aspect, there is provided a sensing system, the sensing system comprising: an image sensor having an image frame; a further sensor having a sensor frame; a processor; and a memory storing at least one of: a mapping generated according to a method as described above or a machine-learned model trained using a mapping generated according to a method as described above.

According to a further aspect, there is provided a system comprising: a processor; and a memory storing instructions that, when executed by the processor, cause the processor to carry out a method as described above.

According to a further aspect, there is provided a computer-readable medium comprising instructions, that when executed by a computer, cause the computer to carry out a method as described above.

According to another aspect, there is computer-implemented method for determining, by a sensing system, a position of a feature of an object within a three-dimensional reference system, the sensing system comprising an image sensor having an image frame and a further sensor having a sensor frame, the method comprising: determining an image frame position corresponding to the feature of the object within the image frame of the image sensor; determining a sensor frame position corresponding to the feature of the obj ect within the sensor frame of the further sensor; and determining a position within the three-dimensional reference system for the feature of the object corresponding to the determined image frame position and the determined sensor frame position based on the mapping that links reference positions within the three-dimensional reference system with corresponding image frame positions within the image frame and corresponding sensor frame positions within the sensor frame.

Determining the position based on the mapping may comprise accessing the mapping and using the mapping to determine the position, as described above. Determining the position based on the mapping may comprise accessing a machine-learned model trained using at least part of the mapping and using the machine-learned model to determine the position, as described above.

Features described above relating to the method for calibrating the sensing method may also apply to this method for determining a position of a feature of an object. For example, the further sensor may be an image sensor, so that both sensors are image sensors. The mapping may map positions in two image frames to a two-dimensional reference frame.

The image sensor may be a first shortwave infrared image sensor. The further sensor may be a second shortwave infrared image sensor. The method may be for sensing a position of a feature of an object within a three-dimensional reference system of an automated welding system.

According to a further aspect, there is provided a system comprising: a processor; and a memory storing instructions that, when executed by the processor, cause the processor to carry out a method as described above.

According to a further aspect, there is provided a computer-readable medium comprising instructions, that when executed by a computer, cause the computer to carry out a method as described above.

Improved pinpointing of an object feature within a reference system may be achieved for the particular application of automated welding and additive manufacturing specifically using techniques described herein.

According to yet another aspect, there is provided a computer-implemented method for monitoring a workpiece being manufactured by an automated welding system, the method comprising: obtaining one or more shortwave infrared images including a feature of the workpiece or the automated welding system from a sensing system comprising one or more image sensors; determining, for each of the one or more shortwave infrared images, a corresponding image position of the feature of the workpiece or the automated welding system using a machine-learned model; and determining a position of the feature of the workpiece or the automated welding system within a reference system of the automated welding system based on the determined image positions.

The workpiece may be being manufactured by the automated welding system if the workpiece is being welded, repaired, additively manufactured, or otherwise worked upon by the automated welding system. The automated welding system may be an additive manufacturing system. The automated welding system may use directed energy deposition. A directed energy deposition automated welding system may use directed energy from a directed energy source to perform the manufacturing of the workpiece. The directed energy source may be a source of plasma, thermal energy, acoustic energy, electrical energy, or a combination thereof. The directed energy source may be a laser, a plasma torch or a flame torch, for example. Directed energy from a plasma arc emitted by a plasma torch may be used to manufacture the workpiece. The system may be a rapid plasma deposition system.

The workpiece may be formed of a metal material, and may be referred to as a metallic workpiece. The workpiece may be mounted on a substrate. The workpiece may be directly or indirectly mounted on the substrate. Another workpiece may function as the substrate, and that workpiece may be directly mounted on the substrate. The workpiece may be a plate, a forged part, a printed part, or part made with any other technology, such as additive manufacturing. The surface of the workpiece being monitored may be a part of the workpiece not in contact with the substrate.

The method may be performed while the automated welding system is operating to manufacture the workpiece. The method may be performed while a welding tool of the automated welding system is being operated. The method may be performed while a welding tool is causing visible light emission due to its operation.

Automated welding system may use tools, such as directed energy sources, and particularly plasma torches, that create visible light when used. The visible light may be at high intensities, creating noise within the visible light spectrum that saturates images captured by optical cameras. In a saturated or noisy image, it may be difficult to identify and perform any sort of analysis to identify a feature or object therein due to the poor signal-to-noise ratio. This may preclude use of optical cameras for the purposes of monitoring automated welding systems.

Instead, therefore, the present method utilizes shortwave infrared images, in which the signal-to-noise ratio may be significantly better, because the light emission by the welding tool may lie outside of the shortwave infrared spectrum. Shortwave infrared images may capture light in the 1500 - 2000 nm wavelength range.

Furthermore, using a machine-learned model to identify the object may provide further benefits. The machine-learned model is trained to identify the object within the shortwave infrared image, and so benefits from the improved signal-to-noise ratio that such an image brings during an automated welding process. Machine-learned models, which may be referred to as trained machine-learning models, may provide greater precision in identifying features of objects and/or objects and providing their position within the image than may otherwise be possible. Accordingly, utilizing a machine-learned model as part of the present method allows improved monitoring and/or manufacturing of a workpiece. This can provide a greater precision, resolution, and therefore quality of a workpiece being manufactured. Improved quality may reduce waste in the manufacturing process as it may result in a workpiece with fewer defects.

Using the machine-learned model may enable greater automation of manufacturing, requiring less human intervention and/or increasing overall speed of manufacture of a workpiece. Such techniques may also reduce damage to the workpiece or manufacturing systems, because improved parameters for manufacturing, such as a standoff distance, can be achieved and maintained.

The machine-learned model may be an object detection model. The machine-learned model may be trained to identify a single feature within an image or to identify multiple features within an image. The machine-learned model may identify a feature within an image with a bounding box.

The machine-learned model may be a single-stage model. Utilizing a single-stage model, such as YOLO, may enable fast determination of the position of the feature while maintaining accuracy. Enabling fast determination may be useful where real-time data is received and where the process is dependent upon precise and fast operation of an automated welding system to enable manufacturing to continue. One or more hyperparameters of the machine-learned model may be adjusted to maintain high speed and high accuracy. For example, the machine-learned model may be configured to provide an indication of the desired component within 0.025 seconds, which corresponds to 40 Hz. Such a machine-learned model operating at a rate of approximately 40 Hz may enable its use in real-time monitoring and manufacturing processes. In other examples, the machine-learned model may provide an indication of the desired component within 0.01 seconds, within 0.02 seconds, within 0.03 seconds, within 0.04 seconds, within 0.05 seconds, or within 0.1 seconds. Speed may be prioritised over accuracy to ensure that real-time processing is maintained.

The machine-learned model may be trained to receive a shortwave infrared image as input and to provide a corresponding image position of the feature within the shortwave infrared image as output. The image position may comprise a pixel position within the shortwave infrared image. The image may be pre-processed before it is provided to the machine-learned model. For example, the shortwave infrared image may be colour mapped, which may further enhance features and better enable the machine-learned model to distinguish between parts of the image.

The machine-learned model may be a deep learning model. The machine-learned model may comprise a trained convolutional neural network (CNN). The machine-learned model may be obtained by training a convolutional neural network. Training may comprise supervised learning using a training data set. The training data set may comprise training data relating to a plurality of real workpieces. The training data set may comprise images obtained during manufacturing of the plurality of real workpieces by an automated welding system. Each image may be labelled to indicate the position of the feature within the image.

During automated welding, a plurality of images may be obtained and stored in memory for use as training data. To build a robust model, a predetermined number of images may be collected, such as 500 images, 1000 images, 2000 images or more than 2000 images. The training data may comprise images relating to a plurality of different workpieces. In some examples, training data may comprise images relating to a single workpiece throughout a manufacturing process.

The reference system may be a three-dimensional reference system. The position may be a three-dimensional position. The position may comprise cartesian coordinates. The one or more shortwave infrared images may comprise a first shortwave infrared image obtained from a first image sensor of the one or more image sensors and a second shortwave infrared image obtained from a second image sensor of the one or more image sensors. The sensing system may comprise a first image sensor configured to obtain shortwave infrared images and a second image sensor configured to obtain shortwave infrared images.

The position of the feature within the reference system may be determined based on a mapping that links reference positions within the reference system with corresponding image positions within an image frame or frames of the one or more image sensors. The mapping may comprise a look-up table or another data structure. The mapping may have any of the features described above in relation to other methods of this disclosure.

For example, the mapping may link reference positions within a three-dimensional reference system with corresponding first image positions within a first image frame of a first image sensor and corresponding second positions within a second image frame of a second image sensor.

The mapping may be stored in a memory of the sensing system. The method may comprise: accessing the mapping stored in the memory of the sensing system; and identifying at least one reference position of the reference system within the mapping that corresponds to the determined image position or positions. The position of the feature may be determined based on the at least one reference position. The position of the feature may be determined based on the at least one reference position as described above in relation to other methods of this disclosure. Particularly the mapping directly may map the corresponding image positions to a reference position. Where the mapping directly maps the corresponding image positions to a reference position, the position of the feature may be the reference position.

The mapping may not directly map at least one of the corresponding image positions to a reference position. Where the mapping does not directly map at least one of the corresponding image positions to a reference position, identifying the at least one reference position of the reference system within the mapping may comprise performing an interpolation based on the mapping to determine the position of the feature. Performing the interpolation may include identifying at least two reference positions of the reference system within the mapping between which the position of the feature falls based on the determined image position; and interpolating between the at least two reference positions to determine the position of the feature.

Determining, by the sensing system, the position of the feature within the reference system based on the mapping may comprise: inputting the determined image position corresponding to the feature into a further machine-learned model trained to output a position within the reference system that corresponds to one or more input image positions using at least part of the mapping as training data; and receiving, from the further machine-learned model, the position of the feature. The further machine-learned model may be a machine-learned model trained on a mapping as described above. The machine-learned model may comprise an artificial neural network. The machine-learned model may be a deep learning model.

The method may comprise, before obtaining the one or more shortwave infrared images, performing a calibration process to generate the mapping. The calibration process may comprise a method for calibrating a sensing system as described above. Generally, the calibration process may comprise: defining a plurality of reference positions within the reference system; for each reference position of the plurality of reference positions, determining one or more image positions corresponding to the reference position within the image frames of the one or more image sensors; and generating the mapping to link the reference positions with the corresponding one or more image positions. Determining one or more image positions may comprise determining a first image position within a first image frame of a first image sensor, and a second image position within a second image frame of a second image sensor, the first and second image sensors being the image sensors of the sensing system configured to capture the shortwave infrared images.

The feature may comprise at least one of: an end of a wire being melted to manufacture the workpiece; a point on the workpiece being worked on; or a tip of a welding tool being used to manufacture the workpiece. The feature may be a standoff point. The standoff point may be a highest point on a section or profile of the workpiece. A plurality of positions of points on the workpiece may be determined to determine a profile, section, portion, or overall form of the workpiece.

The feature may be a droplet impact point on the workpiece. The droplet impact point is a point on the workpiece at which a metallic droplet from a wire feedstock drops onto the workpiece.

The feature may be a point on a melt pool boundary. The point on the melt pool boundary may comprise a head of the melt pool boundary, a tail of the melt pool boundary, or a toe of the melt pool boundary. A melt pool boundary is a region on the workpiece caused by interaction between the directed energy from a welding tool and a surface of the workpiece. A head and tail of the melt pool boundary are points at opposing ends of a longitudinal dimension of the melt pool boundary, while toes of the melt pool boundary are points on opposing ends of a transverse dimension of the melt pool boundary. The head, tail, and toes may together define four outermost points of the melt pool boundary.

The method may comprise determining one or more geometric properties relating to the workpiece based on the position of the feature within the reference system. The one or more geometric properties may comprise a standoff distance. The standoff distance may comprise a vertical distance between a point on the workpiece, referred to as a standoff point, and a part of a welding tool, which may be a tip or a centre point of a tool. For example, the part may be a tip of an electrode. The position of the part of the welding tool may be determined using the method above or may be known, for example based on coordinates or a positioning of a moving element for moving the welding tool.

The feature whose position is determined as described above may be a standoff point, from which the standoff distance can be determined as a geometric property. The one or more geometric properties relating to the workpiece may comprise a size of a melt pool boundary or a size of a melt pool. The method above may be used to determine positions of at least two features, from which a size of the melt pool boundary can be determined, estimated, or predicted. A melt pool boundary size may comprise a dimension of the melt pool boundary, such as a width or length of the melt pool or melt pool boundary, or an area of the melt pool boundary. For example, a position of each toe of the melt pool boundary may be determined and a width of the melt pool boundary may be determined based on the positions of the toes. In some examples, positions of the two toes, a position of the head, and a position of the tail of the melt pool boundary may be determined, and an area of the melt pool boundary may be determined or estimated from those positions. Melt pool boundary sizes are properties that are difficult to determine using conventional techniques. Its determination using the above method provides further control and analysis of automated welding techniques than has previously been possible.

The method may comprise outputting the position of the feature within the reference system of the automated welding system. Outputting may comprise storing the position.

The method may comprise controlling the automated welding system based on the position of the feature within the reference system of the automated welding system. Where a standoff distance is determined, the automated welding system may be controlled to achieve a predefined standoff distance. A mover may be controlled to change the standoff distance if the standoff distance as determined is not equal to the predefined standoff distance. Where a plasma torch is used to provide a plasma arc, the standoff distance may determine the plasma arc resistance and thereby the plasma arc power and characteristics.

According to an aspect, there is provided a controller comprising: at least one processor; and memory storing instructions, that when executed by the at least one processor, cause the controller to carry out a method as described above.

According to an aspect, there is provided a system for monitoring a workpiece being manufactured by an automated welding system, the system comprising: a sensing system comprising one or more image sensors for obtaining shortwave infrared images ; and a controller as described above.

According to an aspect, there is provided a computer-readable medium comprising instructions, that when executed by a computer, cause the computer to carry out a method as described above.

Features presented above in relation to one aspect may be combined with features of another aspect.

Overall, the techniques and aspects described above may provide improved process control and robustness of creation, manufacture, fusion, and/or other ways of forming or altering deposited parts, preforms, and/or workpieces. Improved process control and robustness may be provided in shape and/or dimensions of deposited parts, preforms, and/or workpieces. Such improved control and robustness provides in-situ control over features of the parts, preforms and/or workpieces, such as melt pool, standoff distance, and droplet impact point. Such control may include adjustments to ensure consistent directed energy characteristics, such as plasma arc characteristics, such as power, pressure, shape, distance, energy distribution, and/or time. The directed energy may be provided from a plasma arc such as RPD^{™}. This may result in avoidance or reduction in defects in said parts, preforms, and/or workpieces, and subsequently, reduced scrap rates, shorter development cycles, and/or improved quality of components. The parts, preforms, or workpieces may be, for example, aerostructures, marine structures, vehicular parts, medical devices, firearms, and/or cutlery, and may be manufactured from metals, such as titanium or aluminium, from metal alloy, such as. Ti6Al4V, Inconel variants, etc., or from metal materials.

### Description of figures

The drawings, together with the detailed description, serve to explain various principles of this disclosure.
FIG. 1 shows a schematic diagram of a first sensing system being calibrated.
FIG. 2 shows a schematic diagram of the first sensing system being used to determine a position of a feature of an object.
FIG. 3 shows a flow chart of a method of calibrating a sensing system.
FIG. 4 shows a flow chart of a first method of using a sensing system calibrated according to the method of FIG. 3.
FIG. 5 shows a flow chart of a second method of using a sensing system calibrated according to the method of FIG. 3.
FIG. 6 shows a schematic diagram of a second sensing system.
FIG. 7 shows a perspective view of an indicator and jig for use in calibrating a sensing system.
FIG. 8 shows an example schematic image that may be obtained by an image sensor of a sensing system.

### Detailed description

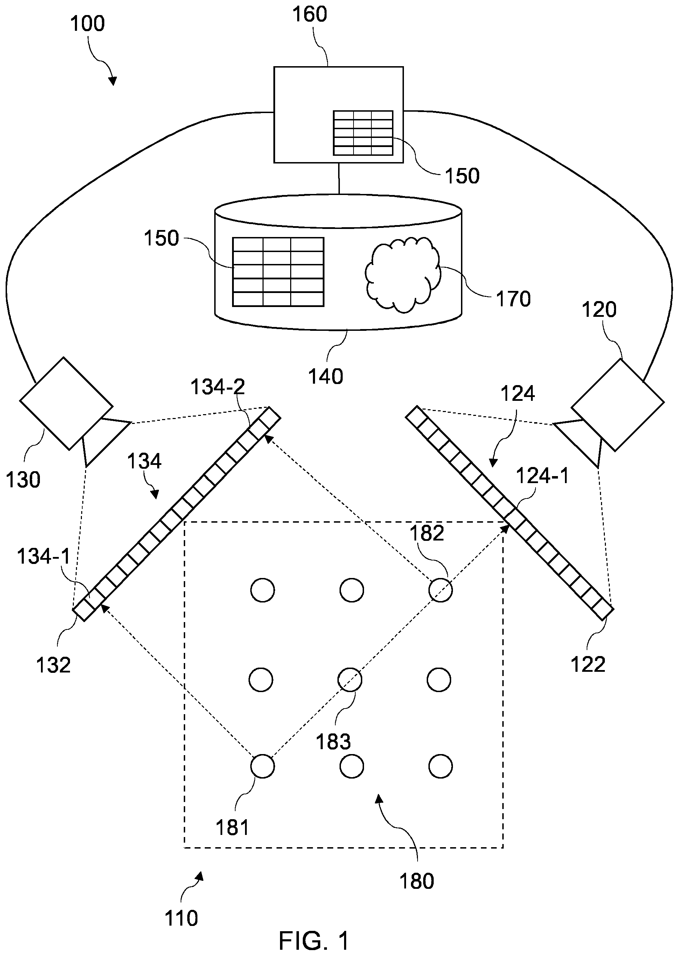

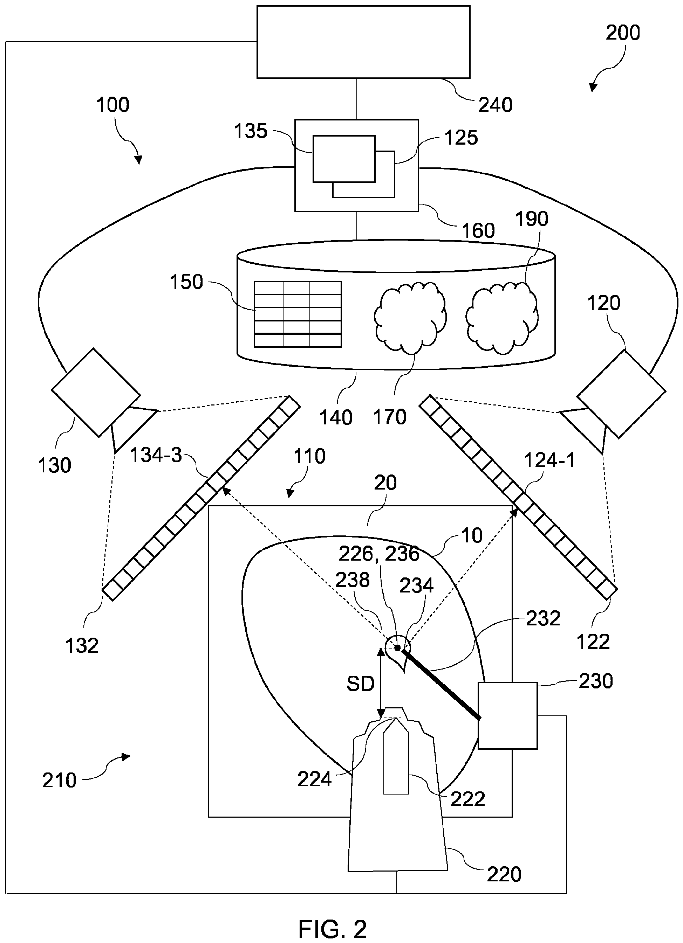

FIG. 1 shows a sensing system 100 having a processor 160 and a memory 140 that is accessible to the processor 160. The processor 160 is configured to perform a calibration process to enable the sensing system 100 to determine a position of a feature of an object within a reference system 110. The reference system 110 is a three-dimensional reference system, although in FIG. 1 only two of the three dimensions of the reference system 110 are visible as FIG. 1 shows a schematic view for ease of depiction and explanation. In the example of FIGs. 1 and 2, the three-dimensional reference system 110 is a reference system of an automated welding system, which can be used to manufacture a workpiece. The feature of the object that is to be determined following the calibration process is a feature of the workpiece or of the automated welding system. The techniques described herein may be applied to other reference systems and systems.

The sensing system 100 further includes a first image sensor 120 and a second image sensor 130. In this example, the first image sensor 120 and the second image sensor 130 are shortwave infrared image sensors. In other words, the first image sensor 120 and the second image sensor 130 are configured to obtain shortwave infrared images.

The first image sensor 120 has a first image frame 122. The first image frame 122 is formed of a plurality of pixels 124. The first image frame 122 is a two-dimensional image frame, such that each pixel 124 has two associated pixel positions or coordinates within the first image frame 122. Only a single row of pixels 124 is shown in FIG.1 for ease of depiction and explanation.

The second image sensor 130 has a second image frame 132. The second image frame 132 is formed of a plurality of pixels 134. The second image frame 132 is a two-dimensional image frame, such that each pixel 134 has two associated pixel positions or coordinates within the second image frame 132. Only a single row of pixels 134 is shown in FIG.1 for ease of depiction and explanation.

The first image sensor 120 and the second image sensor 130 are fixed relative to one another and relative to the three-dimensional reference system 110. The first image frame 122 and the second image frame 132 have a partially overlapping field of view, which includes substantially all of the reference system 110. Generally, the first image sensor 120 and the second image sensor 130 may be provided at any orientation and position relative to the three-dimensional reference system 110 and relative to one another, provided at least some of the field of view of each sensor 120, 130 overlaps.

To calibrate the sensing system 100, a plurality of reference positions 180 are defined. The reference positions 180 are positions within the three-dimensional reference system 110 for use in calibrating the sensing system 100. By defining the reference positions 180, their positions, i.e. their coordinates, within the three-dimensional reference system 110 are provided to the processor 160. The reference positions 180 may be predefined positions, such that their positions within the reference system 110 are already known, or they may be defined during the calibration process by measurement. In FIG. 1, the nine reference positions 180 are provided in a 3 by 3 grid arrangement.

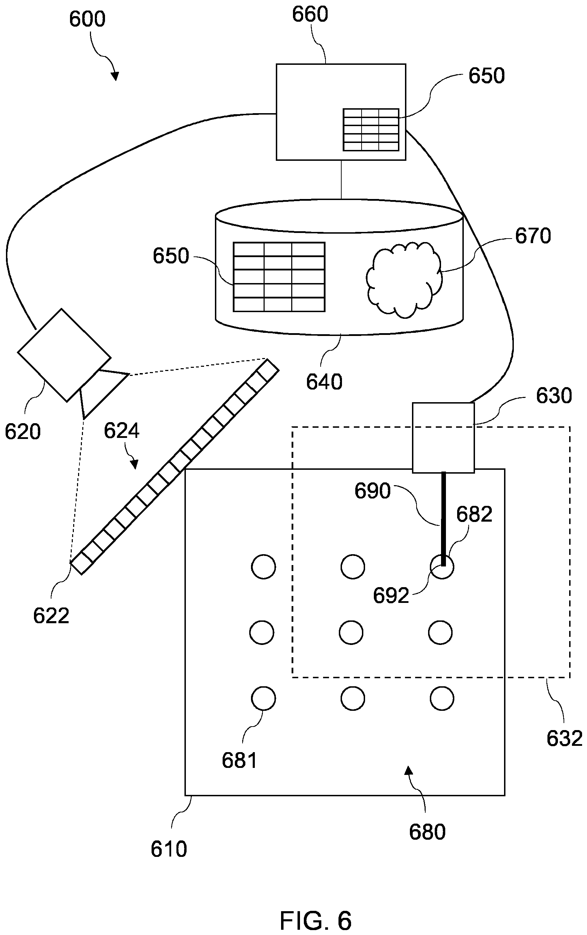

The reference positions 180 are shown in FIG. 1 as circles representing the points at which the reference positions 180 are provided. To enable straightforward identification of the reference positions within the image frames 122, 132, one or more indicators may be provided. A machine-learned model may be used to identify the indicator within the image frames. Indicators and machine-learned models for identifying them within image frames are discussed in more detail below in relation to FIG 6.

Returning to FIG. 1, two of the nine reference positions 180 are used to describe how the calibration process is performed by the processor 160. Those two reference positions are a first reference positions 181 and a second reference position 182. The first and second reference positions 182 are aligned along an axis that is perpendicular to the first image frame 122, meaning that it would not be possible to determine relative positions of the first and second reference positions 181, 182 based on an image obtained from the first image sensor 120 alone. However, as the second image frame 132 has a different field of view of the reference system 110, differentiation between the first reference position 181 and the second reference position 182 is enabled using the second image sensor 130.

Accordingly, the processor 160 is configured to, for each reference position 180, determine a first image frame position within the first image frame 122 corresponding to the reference position and a second image frame position within the second image frame 132 corresponding to the reference position. For the first reference position 181, the processor 160 therefore determines a first image frame position within the first image frame 122, which corresponds to a position of a first pixel 124-1 within the plurality of pixels 124 that form the first image frame 122. The processor 160 also determines a second image frame position within the second image frame 132 for the first reference position 181, with the second image frame position corresponding to a position of a first pixel 134-1 of the plurality of pixels 134 that form the second image frame 132. Similarly, for the second reference position 182, the processor 160 therefore determines a first image frame position within the first image frame 122 and a second image frame position within the second image frame 132. For the second reference position 182, the first image frame position also corresponds to the position of the first pixel 124-1, while the second image frame position corresponds to a position of a second pixel 134-2 in the plurality of pixels 134 that form the second image frame 132. The processor 160 can perform the same process for each of the remaining reference positions 180.

Having determined the first and second image frame positions for each reference position 180, the processor 160 has a unique pair of positions, corresponding to a pair of pixels, for each reference position 180. For the first reference position 181, the pair of positions are for pixels 124-1 and 134-1. For the second reference position 182, the pair of positions are for pixels 124-1 and 134-2.

The processor 160 generates a mapping 150, which in FIG. 1 is in the form of a look-up table, using the defined reference positions 180, the first image frame positions for those reference positions 180, and the second image frame positions for those reference positions 180. The mapping 150 links each reference position 180 with its corresponding first image frame position and with its corresponding second image frame position.

Subsequently, the processor 160 outputs the mapping 150. The sensing system 100 can then determine, based on the mapping 150, where features of an object are within the three-dimensional reference system 110 using the first image sensor 120 and the second image sensor 130.

The processor 160 outputs the mapping 150 storing it in the memory 140 of the sensing system 100 and/or by generating a machine-learned model 170 using the mapping 150 and storing the machine-learned model 170 in the memory 140. The mapping 150 may be stored in memory for direct access by the processor 160 to determine a position within the reference system 110 based on a first image frame position and a second image frame position. The machine-learned model 170 is trained using the mapping 150 and may be stored in the memory 140 for access by the processor 160, so that the processor 160 provides a first image frame position and a second image frame position as input to the machine-learned model 170 and receives a position within the reference system 110 as an output from the machine-learned model 170.

Although only nine reference positions 180 are shown in FIG. 1, the number of reference positions for which first and second image frame positions are determined and the mapping generated may be different. In some examples, two reference positions may be used to create a mapping. In some examples, many more reference positions may be used, such as up to 100, up to 200, up to 500, up to 1000, or in excess of 1000.

Turning now to FIG. 2, a wider system 200 is shown, which includes the sensing system 100 as well as an automated welding system 210. The automated welding system 210 comprises a welding tool 220, a wire feed unit 230, and a controller 240. The automated welding system 210 is being used to manufacture a workpiece 10 on a substrate 20. The substrate 20 is depicted in FIG.2 as being aligned in two dimensions with the reference system 110, such that the reference system 110 forms a cube having the substrate 20 at its base. The substrate 20 may be fixed within the reference system 110 so that it remains aligned with a base of the reference system 110 or may be moveable by a moving element or mover within the reference system 110.

The welding tool 220 has a directed energy source 222, in the form of an electrode, for providing directed energy towards the workpiece 10. The directed energy source 222 has a tip 224. A standoff distance SD is maintained between the tip 224 of the directed energy source 222 and a standoff point 226 on the workpiece 10. The standoff point 226 may be a highest point of a section of the workpiece 10. The standoff distance SD enables properties of the directed energy source 222 to be controlled.

The wire feed unit 230 is configured to provide a wire 232 towards the workpiece 10. Directed energy from the directed energy source 222 is used to melt a tip 234 of the wire 232 to provide welding on a surface of the workpiece 10. The welding may be for the purpose of repair of the workpiece 10, joining two parts of the workpiece 10, or for additively manufacturing the workpiece 10. Melting the tip 234 of the wire 232 causes droplets to fall onto the workpiece 10 at a droplet impact point 236, and a melt pool 238 to form on the surface of the workpiece 10 around the droplet impact point 236.

The welding tool 220, the wire feed unit 230, and the substrate 20 may be moveable by moving elements or 'movers' within the reference system 110. As the wire 232 is being melted during manufacturing, it may not be possible to know an exact location of the wire 232 within the reference system 110 based on control coordinates of the wire feed unit 230 alone. Similarly, features of the melt pool boundary 238, such as a head, toes, or tail of the melt pool boundary 238 may not be directly measurable using coordinates of the moveable components of the automated welding system 200. Instead, the sensing system 100 is provided to enable a tip 234 of the wire 232, or another feature of the workpiece 10 or automated welding system 210 to be pinpointed within the reference system 110.

Instead, the sensing system 100 is provided to monitor the workpiece 10. The processor 160 of the sensing system 100 obtains shortwave infrared images 125, 135 from the image sensors 120, 130 of the sensing system 100. From the images 125, 135, the sensing system 100 determines a position in each image of the feature of the workpiece 10 or of the automated welding system being monitored using a machine-learned model 190. The machine-learned model 190 is different to the machine-learned model 170 trained on the mapping 150 in FIG. 1. The machine-learned model 190 is an object detection model, trained to identify the feature within a shortwave infrared image 125, 135 and to output a position of the feature within the image 125, 135. Based on the identified position or positions identified for the feature within the image, a position of the feature within the reference system 110 is determined.

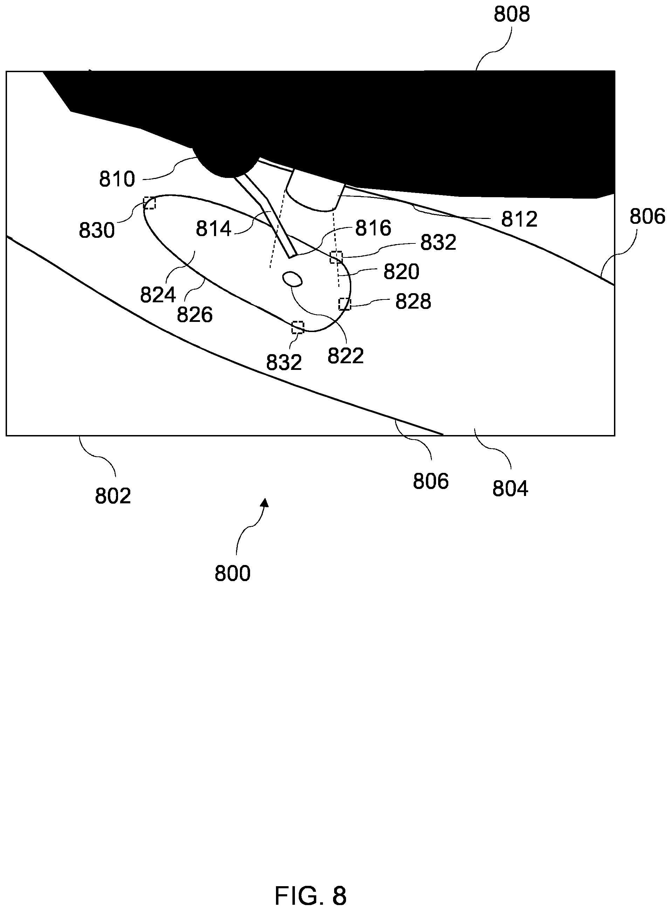

For FIG. 2, two shortwave infrared images 125, 135 are obtained, with a first shortwave infrared image 125 being obtained from the first image sensor 120 and a second shortwave infrared image 135 being obtained from the second image sensor 130. An example schematic image as may be obtained by a shortwave infrared image is shown in FIG. 8 and will be described below.

Continuing with FIG. 2, the processor 160 uses the machine-learned model 190 to identify the feature whose position is to be determined within the reference system 110, which for the purposes of this example will be the tip 234 of the wire 232. The machine-learned model 190 identifies a position of the tip 234 in the first shortwave infrared image 125 and a position of the tip 234 in the second shortwave infrared image 135. As shown in FIG. 2, in relation to the image frames 122, 132, the machine-learned model will identify a first image position of the tip 234 at the position of the first pixel 124-1 in the first image frame 122 based on the first shortwave infrared image 125, and a second image position of the tip 234 at the position of a third pixel 134-3 within the second image frame 132 based on the second shortwave infrared image 135.

When the first image position and the second image position have been obtained for the tip 234, the processor 160 determines the position of the tip 234 in the reference system 110 based on the mapping 150, and this may comprise accessing the mapping 150 directly and determining the position of the tip 234 from the mapping 150 and/or accessing the machine-learned model 170 trained using the mapping 150 and providing the image positions to the model 170 for determining the position of the tip 234.

Where the mapping 150 is used directly, the processor 160 determines whether there is an entry in the mapping 150 that directly corresponds to the pair of positions obtained from each image 125, 135. In other words, it is determined whether the position of the feature is a reference position that was used to calibrate the sensing system 100. In this example, the tip 234 is at a position that does not correspond to a reference position that was used to generate the mapping. In such a circumstance, the processor 160 is configured to interpolate between two or more closest positions in the mapping 150. In this example, the processor 160 may interpolate between the entries for the second reference position 182 and a third reference position 183, as the first image position for the tip 234 is the same as those two reference positions and the second image position for the tip 234 is between the second image frame positions for those two reference positions. Depending on the position of the object, a trilinear interpolation may be performed.

If the position of the tip 234 was at a reference position used to generate the mapping 150, the processor 160 would read out the position from the mapping 150 as the position of the tip 234, thereby directly determining the position from the mapping 150.

Subsequently, having determined the position of the tip 234 based on the mapping 150, the processor 160 may determine other geometric properties, such as the standoff distance or a distance of the tip from a surface of the workpiece 10. The processor 160 may provide the position and/or other geometric properties to the controller 240, which may subsequently control the tool 220, the feed unit 230, or another component such as a moving element to improve manufacture of the workpiece 10.

In FIG. 2, the position of the tip 234 within the three-dimensional reference system 110 is determined using two images 125, 135 from two different sensors 120, 130 and based on the mapping 150 that links positions within image frames 122, 132 of those sensors 120, 130 with positions in the reference system 110. However, in some examples, such as where a position within a two-dimensional reference system is desired, a single image may be used, which may be directly mapped to the reference system or from which a position can be determined using other techniques. In some examples, two or more images may be used and a different technique for determining the position within the reference system.

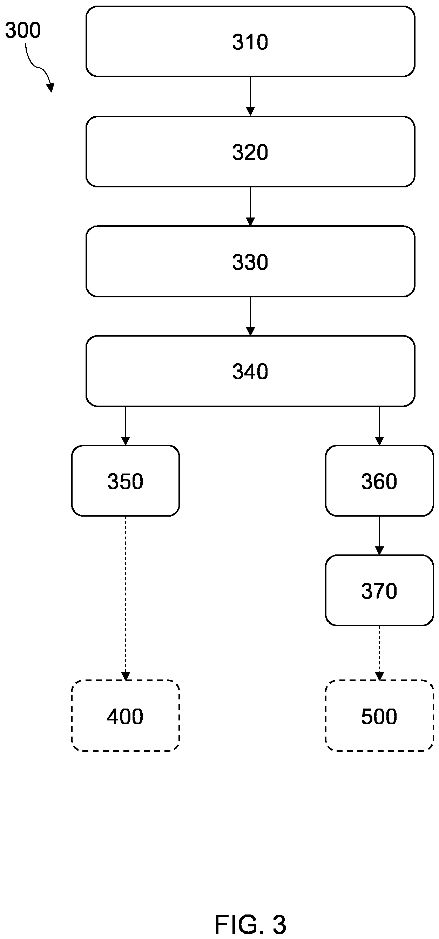

FIG. 3 is a flow chart describing a general method 300 for calibrating a sensing system, such as the sensing system 100 shown in FIG. 1. The method 300 may be performed by a processor 160 of a sensing system 100, or by a separate processor or system. The sensing system for the purposes of the method 300 has an image sensor, such as first image sensor 120 and at least one further sensor, which may be an image sensor such as the second image sensor 130 or another sensor, as will be described below in relation to FIG. 6. The image sensor has an image frame, such as frame 122, and the further sensor has a sensor frame, such as frame 132, both of which are two-dimensional.

The method 300 includes, at step 310, defining two or more reference positions, such as reference positions 180, within the three-dimensional reference system. Such definition may comprise determining coordinates of the positions within the reference system. These may be predetermined or may be determined as part of step 310.

At step 320 of the method 300, the method 300 includes determining image frame positions in the image frame of the image sensor corresponding to each reference position. At step 330, the method 300 includes determining sensor frame positions in the sensor frame of the further sensor corresponding to each reference position. Although steps 330 is depicted after step 320 in FIG. 3, it may be performed at the same time or before step 320. Where positions in image frames are determined, this may be performed using a machine-learned model and an indicator, the machine-learned model configured to identify the indicator within the image frame. Such determination may be based on an image taken using the image sensor.

At step 340, a mapping is generated, such as mapping 150. The mapping links each reference position with its corresponding image frame position and sensor frame position.

After generating the mapping 340, the mapping can be stored in a memory of the sensing system for subsequent use, as in step 350, and/or it can be used to train a machine-learning model to produce a machine-learned model, as in step 360, which is then also stored in memory of the sensing system, as in step 370. Whether the mapping is stored or used to train a machine-learning model is dependent on application and optimization of parameters, such as accuracy, speed, and computational resources.

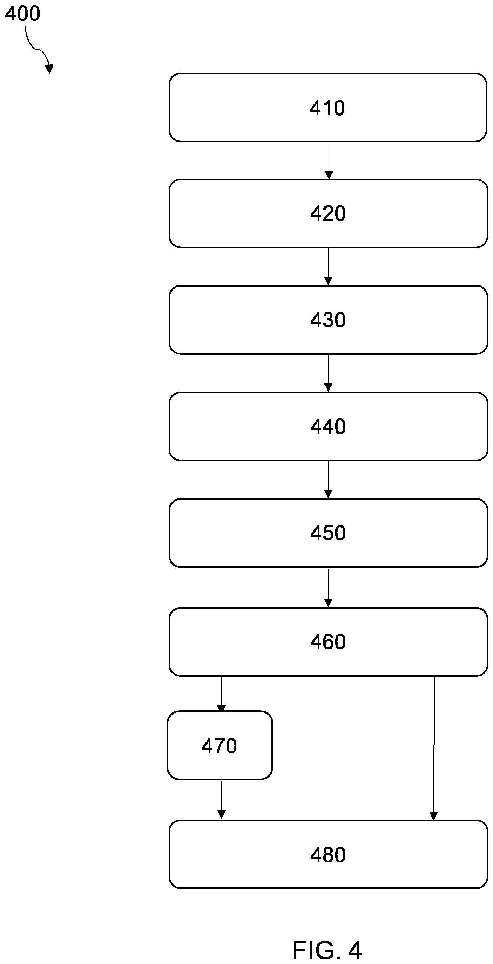

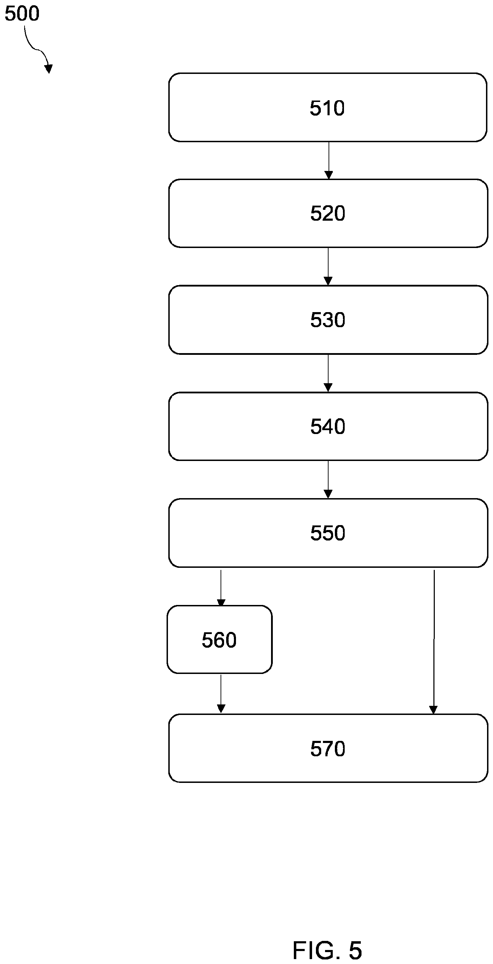

Once the mapping has been stored and/or the machine-learned model trained using the mapping has been stored, the sensing system can determine positions of features within the reference system based on the mapping, i.e. using the mapping directly or using the machine-learned model. Method 400, depicted in FIG. 4, is a method for monitoring an object, such as a workpiece or an object in an automated welding system, and for determining positions of a feature of that object within a reference system using the mapping directly, such as where the final step in the method 300 was step 350. Method 500, depicted in FIG. 5, is a method for monitoring the object and for determining positions of the feature of the object within the reference system using a machine-learned model, such as where the final step of the method 300 was step 370.

Turning first to FIG. 4, the method 400 includes, initially, accessing the mapping from a memory, at step 410. At step 420, readings are obtained from the sensors, such as the image sensor and the further sensor. This may comprise obtaining images from two image sensors, as described in relation to FIG. 2, or an image from an image sensor and a reading from a further sensor as will be described in relation to FIG. 6 below.

At steps 430 and 440, the method 400 includes determining an image frame position corresponding to the feature of the object within the image frame of the image sensor and determining a sensor frame position corresponding to the feature of the object within the sensor frame of the further sensor. An image frame position may be determined within an image obtain in step 420, such as first shortwave infrared image 125 in FIG. 2. The sensor frame position may also be determined within an image obtained in step 420, such as from second shortwave infrared image 135 in FIG. 2, or in other readings from the sensor which would also be obtained from step 420.

Where images are obtained in step 420 and step 430 and/or step 440 involve determining a position within an image, a machine-learned model may be used to enable detection of the feature within the image(s) as described in relation to FIG. 2.

Subsequently, at step 450, at least one reference position is determined from the mapping that corresponds to the determined image frame position and sensor frame position, and at step 460 a position of the feature is determined based on the at least one reference position. By corresponding, it may mean that the image frame position and the sensor frame position are directly found in the mapping and a reference position can be directly read from the mapping. In such a circumstance, step 460 would involve determining the position to be the reference position. The mapping may not include the exact pair of image frame position and sensor frame position, so step 450 may include determining more than one reference positions between which the feature lies and step 460 may include interpolating between the more than one reference positions to identify a position corresponding to the feature.

Once the position of the feature has been determined in step 460, it may be used to perform other steps, such as step 470 in which further features or geometric properties of the object may be determined, or, at step 480, to perform control of a system, such as an automated welding system 210 as in FIG. 2.

In FIG. 5, a machine-learned model is accessed at step 510 of the method 500. The machine-learned model, as described above, is a machine-learned model such as model 170 that is trained using a mapping 150 to enable a position of a feature to be determined based on two image frame positions or an image frame position and a sensor frame position other than an image frame position.

Steps 520, 530, and 540 are the same as steps 420, 430, and 440, and involve obtaining readings and determining image and sensor frame positions within those readings. At step 550, the image frame position and sensor frame position obtained for the readings are provided to the machine-learned model accessed in step 510, and the machine-learned model outputs a position of the feature. The position can then be used to perform further steps, such as steps 560 and/or 570, which are the same as steps 470 and 480 in FIG. 4.

When applied to monitoring a workpiece being manufactured by an automated welding system, the methods 400, 500 of FIG. 4 and FIG. 5 may include the steps of obtaining one or more shortwave infrared images of a feature of the workpiece or the automated welding system from one or more image sensors, determining, using a machine-learned model, a position of the feature within the one or more shortwave infrared images, and determining, based on the position of the feature within the one or more shortwave infrared images, a position of the feature in a reference system. As indicated above in relation to FIG. 2, such a method can be applied to a single image for determining a position of a feature within a two-dimensional reference system as well as to two or more images for determining a position of a feature within a three-dimensional reference system.

The methods of FIGs. 4 and 5 may determine positions of features such as a tip of a wire, a position of an electrode of an automated welding system, a position of another object within an automated welding system, a droplet impact point, a standoff point, or a point on a melt pool boundary. Geometric properties may be determined based on one or more features such as melt pool boundary size, such as a dimension or area, a standoff distance, or one or more other dimensions or distances of the workpiece, the automated welding system, or between the workpiece and a component of the automated welding system. At least some of these features and geometric properties are described below in relation to FIG. 8.

FIG. 6 shows a second sensing system 600 having a processor 660 and memory 640 accessible to the processor 660. The processor 660 is configured to perform a calibration process, such as the method 300 of FIG. 3, to enable the sensing system 600 to determine a position of a feature of an object within a reference system 610. As in FIG. 1, the reference system 610 is a three-dimensional reference system, although in FIG. 6 only two of the three dimensions of the reference system 610 are visible. The three-dimensional reference system 610 is a reference system of an automated welding system, which can be used to manufacture a workpiece. The feature of the object that is to be determined following the calibration process is a feature of the workpiece or of the automated welding system. The techniques described herein may be applied to other reference systems and systems.

The sensing system 600 further includes an image sensor 620, which is a shortwave infrared image sensor configured to obtain shortwave infrared images, and a further sensor associated with a moving element 630. The image sensor 620 has an image frame 622 formed of a plurality of pixels 624. The image frame 622 is a two-dimensional image frame, such that each pixel 624 has two associated pixel positions or coordinates within the first image frame 622. Only a single row of pixels is shown in FIG. 1 for ease of depiction and explanation. The moving element 630 is a wire feed unit of the automated manufacturing system, and is configured to move within a two-dimensional sensor frame 632 and to feed a wire 690 into the three-dimensional reference system 610. The position of the moving element 630 can be sensed, by knowing the coordinates within its sensor frame 632 to which it has been moved. In some examples, the moving element may be configured to move in one dimension and a depth of the wire fed from the element may also be measurable or known, thereby providing a two-dimensional sensor frame.

The image sensor 620 is in a fixed position relative to the three-dimensional reference system 610. The image frame 622 and the sensor frame 632 are partially overlapping, such that the image sensor 620 and the further sensor 630 could be said to have a partially overlapping field of view. The fields of view also overlap with the reference system 610, such that reference positions within the reference system 610 can be measured within the image frame 622 and the sensor frame 632.

To calibrate the sensing system 600, the processor 660 is configured to move the moving element 630 so that a tip 692 of the wire 690 is at each of a plurality of reference positions 680. The plurality of reference positions 680 may be predefined. The tip 692 of the wire 690 may be maintained at a predetermined distance from the mover in this example. In FIG. 6, the tip 692 is shown at a second reference positions 682. A first reference position 681 is also shown, along with seven other reference positions 680, making a set of nine reference positions. In other examples fewer or more than nine reference positions may be defined and used during calibration.

The processor 660 is configured to move the moving element 630 so that the tip 692 of the wire 690 is at each reference position 680, and for each reference position, determine an image frame position within the image frame 622 corresponding to the reference position and a sensor frame position within the sensor frame 632 corresponding to the reference position. The sensor frame position corresponds to a position of the moving element 630. As in FIG. 1, the image frame position may comprise a pixel position. A machine-learned model may be used to identify the tip 692 of the wire 690 and to determine its position within the image frame 622.

As a result, the processor 660 obtains a unique pair of positions, corresponding to a position of a pixel in the image frame 622 and a position of the moving element 630, for each reference position 680.

The processor 660 generates a mapping 650, which in FIG. 6 is in the form of a look-up table, using the defined reference positions 680, the image frame positions for those reference positions 680, and the sensor frame positions for those reference positions 680. The mapping 650 links each reference position 680 with its corresponding image frame position and with its corresponding sensor frame position.

Subsequently, the processor 660 outputs the mapping 650. The sensing system 600 can then determine, based on the mapping 650, where a tip 692 of a wire 690 fed into the reference system 610 by the wire feed unit is within the three-dimensional reference system 610 using the image sensor 620 and the moving element 630. Based on knowing where the tip 692 of the wire 690 is, the wire feed unit can be controlled to move or within the sensor frame or to dispense more wire to ensure that the tip is at the correct position.

The processor 660 outputs the mapping 650 storing it in the memory 640 of the sensing system 600 and/or by generating a machine-learned model 670 using the mapping 650 and storing the machine-learned model 670 in the memory 640.

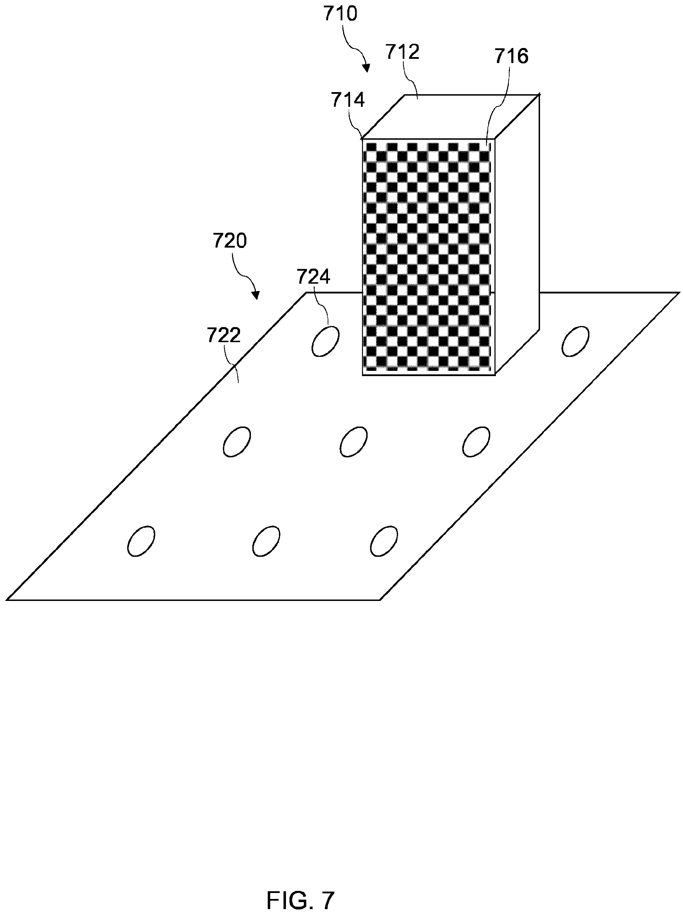

In FIG. 6, the tip 692 of the wire 690 is used as an indicator for the reference positions, so that the reference positions can be accurately mapped to the image frame position and sensor frame position. Other indicators may be used to indicate reference positions. An example of an indicator for this use, such as for use in the system of FIG. 1, is shown in FIG. 7.

FIG. 7 shows an indicator 710 comprising an object 712 having a surface 714 on which a pattern 716 is printed or projected. The pattern 716 is a predefined pattern that is a checkerboard pattern in this example, but may be other patterns in other examples. The object 712 is positioned on a jig 720 comprising a plate 722 having a plurality of holes 724 defining positions at which the object 712 can be placed. The object 712 is at one of the positions in FIG. 7.

By providing a jig 720 or other element having predefined positions at which to place an object 712 forming an indicator 710, the plurality of reference positions for the calibration can be defined. The object 712 may have known dimensions and the jig 720 may be at a known position within the reference system, so that an upper edge may define a reference position as its position within the reference system can be determined. An alternative would be to provide a moving element for moving the object 712 to the predefined positions.

Providing a pattern 716 on a surface 714 of the object 712 may provide an indication of a reference position. A position of the pattern on the object may be known, along with dimensions and positions of the object within the reference system, so that the reference positions are defined. A checkerboard pattern, as shown in FIG. 7, may provide a plurality of different edges that can each define a reference position.

A machine-learned model may be trained to identify the object or a feature of the object, such as one or more edges of the checkerboard pattern, within an image frame in order to determine an image frame position corresponding to the reference position.

Where a pattern is used, it may be projected onto the surface 714 using a lamp or other projection device. Alternatively, the pattern may be printed onto the surface 714 of the object and illuminated using a lamp or other lighting device. The illumination or projection may use shortwave infrared light, and the calibration may be performed in an environment that is absent visible or other forms of light, so that there is a high contrast and that the pattern can be identified precisely within the images.

FIG. 8 shows an example schematic shortwave infrared image 800 that may be obtained by an image sensor during the methods described above, such as the methods 400, 500 of FIGs. 4 and 5. The image sensor may be one of the image sensors 120 or 130, for example, and the image 800 may be an example of one of the images 125 or 135.

The shortwave infrared image 800 has an image frame 802. A workpiece 804 is present in the image, and an outline 806 of the workpiece 804 is illustrated. Also shown in the image is part of the automated welding system 808, including a material feed unit 810 and a welding tool 812, which in this case is a directed energy source such as a plasma torch. The material feed unit 810 is feeding a wire 812 towards the workpiece 804. The wire 814 has a wire tip or end 816. The welding tool 812 is providing directed energy 820 towards the workpiece 804 and the wire tip 816.

The wire tip 816 is being melted and droplets are impacting the surface of the workpiece 804 at a droplet impact point 822. A melt pool 824 has formed due to the interaction of the directed energy, the wire, and the surface of the workpiece 804. The melt pool 824 has a melt pool boundary 826. The melt pool boundary 826 has four feature points, which are a head 828 and a tail 830, which are at either end of a longitudinal dimension of the melt pool, and two toes 832, which are at either end of a transverse dimension of the melt pool. The head 828, tail 830, and toes 832 are here indicated with dotted squares for clarity.

The head 828 and tail 830 of the melt pool boundary may be used to determine a length of the melt pool boundary, and the toes 832 of the melt pool boundary may be used to determine a width. Together, the head 828, tail 830, and toes 832, or a subset of these, may be used to determine other geometric properties of the melt pool boundary, such as an area of the melt pool boundary.

Various aspects of this disclosure can be implemented in a data processing system suitable for storing and/or executing program code that includes at least one processor coupled directly or indirectly to memory elements.

The techniques described herein can be embodied in a system, a method, and/or a computer program product. The computer program product can include a computer readable storage medium (or media) having computer readable program instructions thereon for causing a processor to carry out aspects of the present disclosure. The computer readable storage medium can be a tangible device that can retain and store instructions for use by an instruction execution device.

Computer readable program instructions described herein can be downloaded to respective computing/processing devices from a computer readable storage medium or to an external computer or external storage device via a network, for example, the Internet, a local area network, a wide area network and/or a wireless network.

Computer readable program instructions for carrying out operations of the present disclosure can be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions can execute entirely on the user's computer, partly on the user's computer, as a stand-alone software package, partly on the user's computer and partly on a remote computer or entirely on the remote computer or server.

It will be apparent to those skilled in the art that various modifications and variation can be made to what is described above. It is intended that this disclosure cover modifications and variations thereof, provided that such modifications and the variations come within the scope of the appended claims, and their equivalents.

## Claims

1. A computer-implemented method (400) for monitoring a workpiece (10) being manufactured by an automated welding system (210), the method (400) comprising:
obtaining (420, 430) one or more shortwave infrared images (125, 135) including a feature (236; 234) of the workpiece (10) or of the automated welding system (210) from a sensing system (100) comprising one or more image sensors (120, 130);
determining (440), for each of the one or more shortwave infrared images (125, 135), a corresponding image position of the feature of the workpiece or the automated welding system (210) using a machine-learned model (190); and
determining (450) a position of the feature (236; 234) of the workpiece (10) or the automated welding system (210) within a reference system (110) of the automated welding system (210) based on the determined image positions.

2. The computer-implemented method (400) of claim 1, wherein the machine-learned model (190) is an object detection model.

3. The computer-implemented method (400) of claim 1 or claim 2, wherein the machine-learned model (190) is a single-stage model.

4. The computer-implemented method (400) of any preceding claim, wherein the machine-learned model (190) is trained to receive a shortwave infrared image as input and to provide a corresponding image position of the feature (236; 234) within the shortwave infrared image (125, 135) as output.

5. The computer-implemented method (400) of any preceding claim, wherein the reference system (110) is a three-dimensional reference system, and wherein the one or more shortwave infrared images (125, 135) comprises a first shortwave infrared image (125) obtained from a first image sensor (120) of the one or more image sensors and a second shortwave infrared image (135) obtained from a second image sensor (130) of the one or more image sensors.

6. The computer-implemented method (400) of any preceding claim, wherein the position of the feature within the reference system is determined (450) based on a mapping that links reference positions within the reference system with corresponding image positions within image frames of the one or more image sensors (120, 130).

7. The computer-implemented method (400) of claim 6, wherein the mapping (150) is stored in a memory (140) of the sensing system (100), and wherein the method (400) comprises:
accessing the mapping (150) stored in the memory (140) of the sensing system (100); and
identifying at least one reference position of the reference system within the mapping (150) that corresponds to the determined image positions, wherein the position of the feature is determined (450) based on the at least one reference position.

8. The computer-implemented method (400) of claim 6 or claim 7, wherein the mapping (150) comprises a look-up table.

9. The computer-implemented method (400) of any of claims 6 to 8, wherein either:
the mapping (150) directly maps the corresponding image positions to a reference position, and the position of the feature is the reference position; or
the mapping (150) does not directly map at least one of the corresponding image positions to a reference position, and identifying the at least one reference position of the reference system within the mapping comprises performing an interpolation based on the mapping to determine the position of the feature.

10. The computer-implemented method (400) of any of claims 6 to 9, wherein determining, by the sensing system (100), the position of the feature within the reference system based on the mapping (150) comprises:
inputting the determined image position corresponding to the feature into a further machine-learned model trained to output a position within the reference system that corresponds to one or more input image positions using at least part of the mapping as training data; and
receiving, from the further machine-learned model, the position of the feature.

11. The computer-implemented method (400) of any of claims 6 to 10, comprising, before obtaining the one or more shortwave infrared images, performing a calibration process to generate the mapping (150).

12. The computer-implemented method (400) of claim 11, wherein the calibration process comprises:
defining a plurality of reference positions within the reference system;
for each reference position of the plurality of reference positions:
determining one or more image positions corresponding to the reference position within the image frames of the one or more image sensors; and
generating the mapping to link the reference positions with the corresponding one or more image positions.

13. The computer-implemented method (400) of any preceding claim, wherein the feature comprises at least one of:
an end (234) of a wire being melted to manufacture the workpiece (10);
a point (236, 238) on the workpiece (10) being worked on; or
a tip (224) of a welding tool (220) being used to manufacture the workpiece (10).

14. The computer-implemented method (400) of any preceding claim, further comprising:
determining (470) one or more geometric properties relating to the workpiece based on the position of the feature within the reference system.

15. The computer-implemented method (400) of claim 14, wherein the one or more geometric properties comprises at least one of a standoff distance (SD) or a melt pool boundary size.

16. The computer-implemented method (400) of any preceding claim, further comprising:
controlling (480) the automated welding system (210) based on the position of the feature within the reference system (110) of the automated welding system (210).

17. A controller comprising:
at least one processor; and
memory storing instructions, that when executed by the at least one processor, cause the controller to carry out the method (400) of any preceding claim.

18. A system for monitoring a workpiece being manufactured by an automated welding system, the system comprising:
a sensing system comprising one or more image sensors for obtaining shortwave infrared images ; and
the controller of claim 17.

19. A computer-readable medium comprising instructions, that when executed by a computer, cause the computer to carry out the method (400) of any of claims 1 to 16.
